# EUROPEAN PATENT APPLICATION

(11) **EP 4 434 869 A1**
(43) Date of publication of application: **25.09.2024**
(21) Application number: 23178401.8
(22) Date of filing: 09.06.2023
(51) Int. Cl.: B62M 6/50, B60L 50/20, B62M 19/00

(54) **METHOD AND APPARATUS FOR TORQUE CONTROLLING OF ELECTRIC BICYCLE**

(30) Priority: 22.03.2023 KR 20230037168
(71) Applicant: HL Mando Corporation, Pyeongtaek-si, Gyeonggi-do 17962 (KR)
(72) Inventor: Park, Chanheung, Hwaseong-si, Gyeonggi-do 18484 (KR)
(74) Representative: Gulde & Partner

(57) **Abstract**

The present disclosure relates to a method and apparatus for controlling torque of an electric bicycle, and includes detecting, by a torque control apparatus, a pedal speed and a wheel speed according to a motion of an electric bicycle, calculating, by the torque control apparatus, a wheel speed command value based on the pedal speed; calculating, by the torque control apparatus, a difference value between the wheel speed command value and the wheel speed, generating, by the torque control apparatus, a torque command value based on the difference value; and driving, by the torque control apparatus, the wheel and the pedal of the electric bicycle based on the generated torque command value, and can also be applied to other embodiments.

## Description

### [Cross-Reference to Related Application]

This application claims priority to and the benefit of Korean Patent Application No. 10-2023-0037168, filed on March 22, 2023, the disclosure of which is incorporated herein by reference in its entirety.

### [Technical Field]

The present disclosure relates to a method and apparatus for controlling torque of an electric bicycle.

### [Background Art]

In general, a bicycle is driven by using a pedal effort generated by a user's pedaling, and there is a problem in that there is no difficulty in driving in a flat ground, but a lot of force is required when going up a slope such as a hill. In order to solve this problem, recently, an electric bicycle having a motor mounted thereon to be driven by using a driving force of a motor in addition to a pedal effort of a user has been developed.

An electric bicycle is equipped with a motor driven by a battery, and may be driven only by the user's power by stepping on the pedals, driven only by the power of a motor driven by a battery, or driven by both the user's power and the motor's power.

However, even when using a pedal effort generated by a user's pedaling, the user uses continuous force during pedaling depending on a total weight of the electric bicycle or a slope of a ground, and thus the user may experience fatigue when the user is pedaling.

### [Disclosure]

### [Technical Problem]

In order to solve such a conventional problem, embodiments of the present disclosure provide a method and apparatus for controlling torque of an electric bicycle, which can provide a constant pedal feeling to a user regardless of the weight of the electric bicycle or the slope of the ground when the electric bicycle is used without a chain.

### [Technical Solution]

A method for controlling torque of an electric bicycle according to an embodiment of the present disclosure includes detecting, by a torque control apparatus, a pedal speed and a wheel speed according to a motion of an electric bicycle, calculating, by the torque control apparatus, a wheel speed command value based on the pedal speed, calculating, by the torque control apparatus, a difference value between the wheel speed command value and the wheel speed, generating, by the torque control apparatus, a torque command value based on the difference value, and driving, by the torque control apparatus, the wheel and the pedal of the electric bicycle based on the generated torque command value.

In addition, the method may further include identifying, by the torque control apparatus, a pedal torque value according to a pedal position of the electric bicycle.

In addition, the generating a torque command value may include generating a wheel torque command value based on the difference value.

In addition, the generating a wheel torque command value may include deriving 1 if the difference value is greater than 0, and generating a pedal torque command value by applying the derived 1 to the pedal torque value.

In addition, the generating a wheel torque command value includes may include deriving 0 if the difference value is less than or equal to 0, and generating the pedal torque command value by applying the derived 0 to the pedal torque value.

In addition, the driving the wheel and the pedal of the electric bicycle may include controlling a motor driving the wheel based on the generated wheel torque command value, and controlling a generator driving the pedal based on the generated pedal torque command value such that a pedal effort generated in the electric bicycle is constant.

In addition, the calculating a wheel speed command value may be a step of calculating the wheel speed command value by applying a gear ratio to the pedal speed.

In addition, the driving the wheel and the pedal of the electric bicycle may be a step of driving the wheel and the pedal of the electric bicycle without a chain.

Furthermore, a torque control apparatus according to an embodiment of the present disclosure includes a sensor part configured to detect a pedal speed and a wheel speed of an electric bicycle in motion, and a controller configured to calculate a wheel speed command value based on the wheel speed, generate a torque command value by calculating a difference value between the wheel speed and the wheel speed command value, and control driving of the wheel and the pedal of the electric bicycle based on the generated torque command value.

In addition, the controller may identify a pedal torque value according to a pedal position of the electric bicycle based on the pedal speed detected by the sensor part.

In addition, the controller may generate a wheel torque command value based on the difference value.

In addition, the controller may generate a pedal torque command value by applying 1 to the pedal torque value if the difference value is greater than 0, and generate the pedal torque command value by applying 0 to the pedal torque value if the difference value is less than or equal to 0.

In addition, the controller may include a wheel driving part configured to control a motor driving the wheel based on the generated wheel torque command value, and a pedal driving part configured to control a generator driving the pedal based on the generated pedal torque command value such that a pedal effort generated in the electric bicycle is constant.

In addition, the controller may calculate the wheel speed command value by applying a gear ratio to the pedal speed.

In addition, the controller may drive the wheel and the pedal of the electric bicycle without a chain.

### [Advantageous Effects]

As described above, the method and apparatus for controlling torque of an electric bicycle according to the present disclosure provide a constant pedal feeling to a user regardless of the weight of the electric bicycle or the slope of the ground when the electric bicycle without a chain is used, thereby minimizing the feeling of fatigue felt by the user performing the pedaling.

### [Brief Description of Drawings]

FIG. 1 illustrates a configuration diagram of a torque control apparatus for an electric bicycle for controlling torque according to an embodiment of the present disclosure.
FIG. 2 illustrates a flowchart for describing a method for controlling torque of an electric bicycle according to an embodiment of the present disclosure.
FIG. 3 illustrates a detailed flowchart for describing a method for generating a torque command for controlling torque of an electric bicycle according to an embodiment of the present disclosure.

### [Modes of the Invention]

Hereinafter, preferred embodiments according to the present disclosure will be described in detail with reference to the accompanying drawings. The detailed description to be disclosed hereinafter with the accompanying drawings is intended to describe exemplary embodiments of the present disclosure and is not intended to represent the only embodiments in which the present disclosure may be implemented. In the drawings, parts unrelated to the description may be omitted for clarity of description of the present disclosure, and like reference numerals may designate like elements throughout the specification.

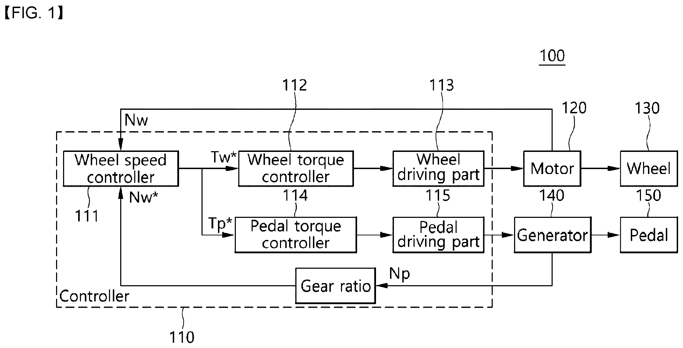

FIG. 1 illustrates a configuration diagram of a torque control apparatus for an electric bicycle for controlling torque according to an embodiment of the present disclosure.

Referring to FIG. 1, a wheel speed command value Nw* generated by multiplying a pedal speed Np detected by a sensor part (not shown) by a gear ratio in a torque control apparatus 100 is input to a wheel speed controller 111 together with a wheel speed Nw detected by the sensor part.

The wheel speed controller 111 generates a wheel torque command value Tw* and a pedal torque command value Tp* for driving a wheel. The wheel torque command value generated by the wheel speed controller 111 is input to a wheel torque controller 112, and the pedal torque command value is input to a pedal torque controller 114.

The wheel speed controller 111 may generate a wheel torque command value based on a difference value between the wheel speed command value and the wheel speed. In addition, the wheel speed controller 111 may generate a pedal torque command value that varies according to the difference value between the wheel speed command value and the wheel speed and the pedal torque value. In this case, the pedal torque value may be varied based on a pedal position.

More specifically, when the difference value between the wheel speed command value and the wheel speed is greater than 0, the wheel speed controller 111 replaces the difference value with 1, and when the difference value between the wheel speed command value and the wheel speed is less than or equal to 0, it replaces the difference value with 0. The wheel speed controller 111 may calculate a value obtained by multiplying the pedal torque value by the difference value replaced with 0 or 1 as the pedal torque command value, and the calculated pedal torque command value is input to the pedal torque controller 114.

The wheel torque command value is input to the wheel torque controller 112. The wheel torque controller 112 generates a motor current command value based on the wheel torque command value, and provides the motor current command value to a wheel driving part 113. The wheel driving part 113 uses a measured current of a motor 120 as feedback to generate a current for driving the motor, and provides the generated current to the motor 120. The motor 120 may drive a wheel 130 based on the current provided from the wheel driving part 113.

In addition, the pedal torque command value is input to the pedal torque controller 114. The pedal torque controller 114 generates a generator current command value based on the pedal torque command value, and provides the generator current command value to a pedal driving part 115. The pedal driving part 115 uses an actual current of a generator 140 as feedback to generate a current for generating generator torque, and provides the generated current to the generator 140. The generator 140 may drive a pedal 150 based on the current provided from the pedal driving part 115.

As such, the torque control apparatus 100 calculates a pedal torque command value by multiplying the pedal torque value by 1 only when the difference value is greater than 0, that is, when the pedal speed is faster than the wheel speed, and maintains a pedal torque value corresponding to the position of the wheel, thereby allowing the user to feel a constant pedal feeling in an electric bicycle without a chain. In this case, when the difference value is equal to or less than 0, the pedal torque command value calculated by multiplying the pedal torque value by 0 becomes 0 and thus no separate pedal torque is generated.

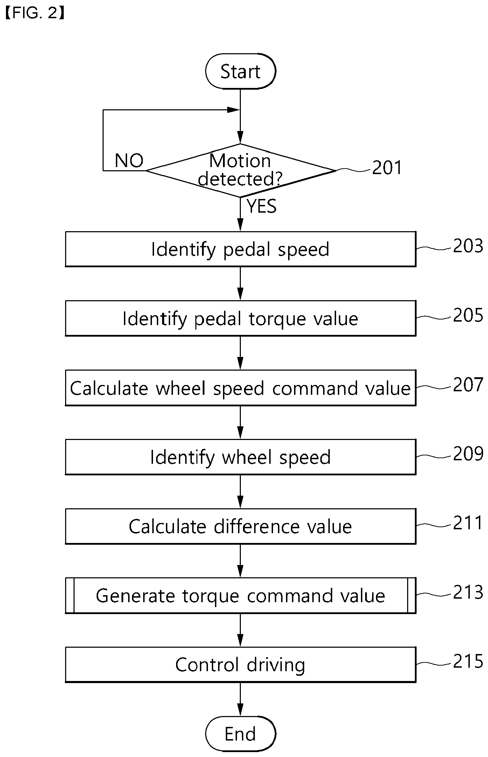

FIG. 2 illustrates a flowchart for describing a method for controlling torque of an electric bicycle according to an embodiment of the present disclosure.

Referring to FIG. 2, in step 201, the controller 110 detects whether the electric bicycle is moved based on the detecting data received from the sensor part (not shown). As a result of the checking in step 201, when a motion of the electric bicycle is detected, the controller 110 may perform step 203, and when the motion is not detected, the controller 110 may continuously detect whether the motion is performed.

In step 203, the controller 110 identifies a pedal speed Np of the pedal 150 provided in the electric bicycle based on the detecting data received from the sensor part. In step 205, the controller 110 identifies a pedal torque value according to a position of the pedal 150. In this case, the pedal torque value may be checked based on a position of the pedal 150, that is, a pedal position up to 360 degrees with respect to 0 degrees.

In step 207, the controller 110 calculates a wheel speed command value Nw* by multiplying the pedal speed by the gear ratio, and performs step 209. In step 209, the controller 110 identifies a wheel speed Nw of the wheel 130 provided in the electric bicycle based on the detecting data received from the sensor part.

In step 211, the controller 110 inputs the wheel speed command value calculated in step 207 and the wheel speed identified in step 209 to the wheel speed controller 111. In step 211, the wheel speed controller 111 calculates a difference between the wheel speed command value and the wheel speed, and performs step 213.

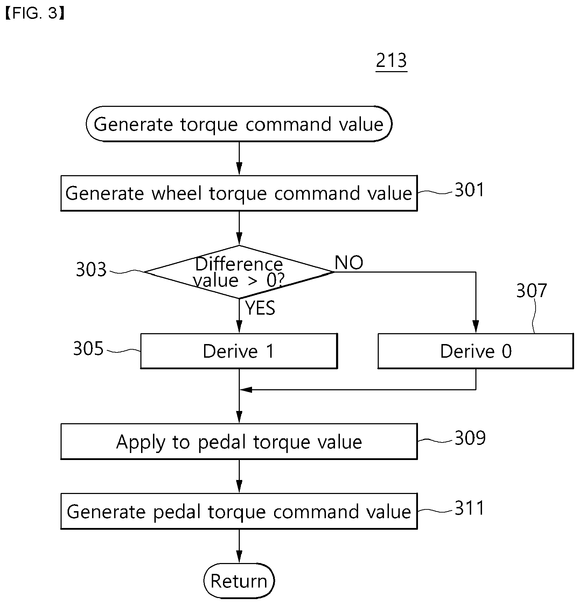

In step 213, the wheel speed controller 111 generates a torque command value. In this case, the method of generating the torque command value will be described in more detail with reference to FIG. 3 below. FIG. 3 illustrates a detailed flowchart for describing a method for generating a torque command for controlling torque of an electric bicycle according to an embodiment of the present disclosure.

Referring to FIG. 3, in step 301, the wheel speed controller 111 generates a wheel torque command value Tw* based on the difference value calculated in step 211. In step 303, the wheel speed controller 111 identifies whether the difference between the wheel speed command value and the wheel speed is greater than 0. As a result of the checking in step 303, the wheel speed controller 111 performs step 305 if the difference value is greater than 0, and performs step 307 if the difference value is less than or equal to 0.

In step 305, the wheel speed controller 111 replaces the difference value with 1, and in step 307, the wheel speed controller 111 replaces the difference value with 0. In step 309, the wheel speed controller 111 multiplies the pedal torque value identified in step 205 by a difference value replaced with 0 or 1. Then, in step 311, the wheel speed controller 111 generates a pedal torque command value using a value calculated by multiplying the pedal torque value by the difference value, and returns to step 215 of FIG. 2.

Then, in step 215, the motor 120 and the generator 140 control the driving of the wheel 130 and the pedal 150, respectively. More specifically, the wheel torque command value generated by the wheel speed controller 111 is input to the wheel torque controller 112. The wheel torque controller 112 generates a motor current command value based on the wheel torque command value, and provides the motor current command value to a wheel driving part 113. The wheel driving part 113 uses a measured current of a motor 120 as feedback to generate a current for driving the motor, and provides the generated current to the motor 120. Based on this, the motor 120 may drive the wheel 130.

In addition, the pedal torque command value generated by the wheel speed controller 111 is input to the pedal torque controller 114. The pedal torque controller 114 generates a generator current command value based on the pedal torque command value, and provides the generator current command value to a pedal driving part 115. The pedal driving part 115 uses an actual current of a generator 140 as feedback to generate a current for generating generator torque, and provides the generated current to the generator 140. Based on this, the generator 140 may drive the pedal 150.

The embodiments of the present disclosure disclosed in the present specification and drawings are only provided as specific examples to easily describe the technical content of the present disclosure and to aid understanding of the present disclosure, and are not intended to limit the scope of the present disclosure. Therefore, the scope of the present disclosure should be construed that all changes or modifications derived based on the technical idea of the present disclosure in addition to the embodiments disclosed herein are included in the scope of the present disclosure.

## Claims

1. A method for controlling torque, comprising:
detecting, by a torque control apparatus, a pedal speed and a wheel speed according to a motion of an electric bicycle;
calculating, by the torque control apparatus, a wheel speed command value based on the pedal speed;
calculating, by the torque control apparatus, a difference value between the wheel speed command value and the wheel speed;
generating, by the torque control apparatus, a torque command value based on the difference value; and
driving, by the torque control apparatus, the wheel and the pedal of the electric bicycle based on the generated torque command value.

2. The method for controlling torque of claim 1, further comprising identifying, by the torque control apparatus, a pedal torque value according to a pedal position of the electric bicycle.

3. The method for controlling torque of claim 2, wherein the generating a torque command value comprises generating a wheel torque command value based on the difference value.

4. The method for controlling torque of claim 3, wherein the generating a wheel torque command value comprises:
deriving 1 if the difference value is greater than 0; and
generating a pedal torque command value by applying the derived 1 to the pedal torque value.

5. The method for controlling torque of claim 4 wherein the generating a wheel torque command value comprises:
deriving 0 if the difference value is less than or equal to 0; and
generating the pedal torque command value by applying the derived 0 to the pedal torque value.

6. The method for controlling torque of claim 5, wherein the driving the wheel and the pedal of the electric bicycle comprises:
controlling a motor driving the wheel based on the generated wheel torque command value; and
controlling a generator driving the pedal based on the generated pedal torque command value such that a pedal effort generated in the electric bicycle is constant.

7. The method for controlling torque of claim 1, wherein the calculating a wheel speed command value is a step of calculating the wheel speed command value by applying a gear ratio to the pedal speed.

8. The method for controlling torque of claim 1, wherein the driving the wheel and the pedal of the electric bicycle is a step of driving the wheel and the pedal of the electric bicycle without a chain.

9. A torque control apparatus, comprising:
a sensor part configured to detect a pedal speed and a wheel speed of an electric bicycle in motion; and
a controller configured to calculate a wheel speed command value based on the wheel speed, generate a torque command value by calculating a difference value between the wheel speed and the wheel speed command value, and control driving of the wheel and the pedal of the electric bicycle based on the generated torque command value.

10. The torque control apparatus of claim 9, wherein the controller identifies a pedal torque value according to a pedal position of the electric bicycle based on the pedal speed detected by the sensor part.

11. The torque control apparatus of claim 10, wherein the controller generates a wheel torque command value based on the difference value.

12. The torque control apparatus of claim 11, wherein the controller generates a pedal torque command value by applying 1 to the pedal torque value if the difference value is greater than 0, and generates the pedal torque command value by applying 0 to the pedal torque value if the difference value is less than or equal to 0.

13. The torque control apparatus of claim 12, wherein the controller comprises:
a wheel driving part configured to control a motor driving the wheel based on the generated wheel torque command value; and
a pedal driving part configured to control a generator driving the pedal based on the generated pedal torque command value such that a pedal effort generated in the electric bicycle is constant.

14. The torque control apparatus of claim 9, wherein the controller calculates the wheel speed command value by applying a gear ratio to the pedal speed.

15. The torque control apparatus of claim 9, wherein the controller drives the wheel and the pedal of the electric bicycle without a chain.

## Amended claims

### Amended claims in accordance with Rule 137(2) EPC.

1. A method for controlling the torque of a motor and the torque of a generator of an electric bicycle without a chain, comprising:
detecting, by a torque control apparatus (100), a cadence and a wheel speed of the electric bicycle;
calculating, by the torque control apparatus (100), a wheel speed command value (Nw) based on the cadence;
calculating, by the torque control apparatus (100), a difference value between the wheel speed command value (Nw) and the wheel speed of the electric bicycle;
generating, by the torque control apparatus (100), a torque command value based on the difference value between the wheel speed command value (Nw) and the wheel speed of the electric bicycle; and
driving, by the torque control apparatus (100), the motor driving the wheel (130) and the generator driving the pedals (150) of the electric bicycle based on the generated torque command value,
identifying the cadence of the pedal (150) provided in the electric bicycle based on detecting data received from a sensor part;
identifying, by the torque control apparatus (100), a pedal torque value (Tp) according to a pedal position of the electric bicycle,
wherein the pedal torque value is checked based on a position of the pedal 150, that is, a pedal position up to 360 degrees with respect to 0 degrees.

2. The method according to claim 1, wherein the generating a torque command value comprises generating a wheel torque command value (Tw) based on the difference value between the wheel speed command value and the wheel speed.

3. The method according to claim 2, wherein the generating a wheel torque command value (Tw) based on a difference between the wheel speed command value and the wheel speed comprises:
identifying whether the difference between the wheel speed command value (Tw) and the wheel speed is greater than 0;
replacing the difference value with 1 if the difference value is greater than 0, or replacing the difference value with 0 if the difference value is less than or equal to 0.

4. The method according to claim 3, wherein the driving the wheel (130) and the pedal (150) of the electric bicycle comprises:
controlling a motor (120) driving the wheel (130) based on the generated wheel torque command value (Tw); and
controlling a generator (140) driving the pedal (150) based on the generated pedal torque command value (Tp) such that a pedal (150) effort generated in the electric bicycle is constant.

5. The method according to claim 1, wherein the calculating a wheel speed command value (Nw) is a step of calculating the wheel speed command value (Nw) by applying a gear ratio to the cadence.

6. The method according to claim 1, wherein the driving the wheel (130) and the pedal (150) of the electric bicycle is a step of driving the wheel (130) and the pedal (150) of the electric bicycle without a chain.

7. A torque control apparatus (100) of a motor and the torque of a generator of an electric bicycle without a chain, comprising:
a sensor part configured to detect a cadence and a wheel speed of an electric bicycle; and
a controller (110, 111, 112, 114) configured to calculate a wheel speed command value (Nw) based on the wheel speed of the electric bicycle, generate a torque command value by calculating a difference value between the wheel speed and the wheel speed command value (Nw) of the electric bicycle, and control driving the motor driving the wheel (130) and the generator driving the pedals (150) of the electric bicycle based on the generated torque command value, **characterized in that** . the controller (110, 111, 112, 114)
identifies the cadence of the pedal (150) provided in the electric bicycle based on the detecting data received from a sensor part;
identifies a pedal torque value according to a pedal position of the electric bicycle based on the cadence detected by the sensor part,
wherein the pedal torque value is checked based on a position of the pedal 150, that is, a pedal position up to 360 degrees with respect to 0 degrees.

8. The torque control apparatus (100) of claim 7, wherein the controller (110, 111, 112, 114) generates a wheel torque command value (Tw) based on the difference value between the wheel speed command value and the wheel speed.

9. The torque control apparatus (100) of claim 8, wherein the controller (110, 111, 112, 114) generates a pedal torque command value (Tp) by applying 1 to the pedal torque value if the difference value is greater than 0, and generates the pedal torque command value (Tp) by applying 0 to the pedal torque value if the difference value is less than or equal to 0.

10. The torque control apparatus (100) of claim 9, wherein the controller (110, 111, 112, 114) comprises:
a wheel driving part (113) configured to control a motor (120) driving the wheel (130) based on the generated wheel torque command value (Tw); and
a pedal driving part (115) configured to control a generator (140) driving the pedal (150) based on the generated pedal torque command value (Tp) such that a pedal effort generated in the electric bicycle is constant.

11. The torque control apparatus (100) of claim 7, wherein the controller (110, 111, 112, 114) calculates the wheel speed command value (Nw) by applying a gear ratio to the cadence.

12. The torque control apparatus (100) of claim 7, wherein the controller (110, 111, 112, 114) drives the wheel (130) and the pedal (150) of the electric bicycle without a chain.
